# NEUE EUROPÄISCHE PATENTSCHRIFT

(11) **EP 2 191 579 B2**
(45) Veröffentlichungstag und Bekanntmachung des Hinweises auf die Entscheidung über den Einspruch: **11.01.2023**
(45) Hinweis auf die Patenterteilung: 23.03.2011
(21) Anmeldenummer: 08802354.4
(22) Anmeldetag: 18.09.2008
(51) Int. Cl.: H04B 1/28

(54) **VORRICHTUNG UND VERFAHREN ZUM EMPFANGEN EINES INFORMATIONSSIGNALS MIT EINEM INFORMATIONSSIGNALSPEKTRUM**
APPARATUS AND METHOD FOR RECEIVING AN INFORMATION SIGNAL WITH AN INFORMATION SIGNAL SPECTRUM
DISPOSITIF ET PROCÉDÉ POUR RECEVOIR UN SIGNAL D'INFORMATION PRÉSENTANT UN SPECTRE DE SIGNAL D'INFORMATION

(30) Priorität: 18.09.2007 DE 102007044469
(43) Veröffentlichungstag der Anmeldung: 02.06.2010
(73) Patentinhaber: Innovationszentrum für Telekommunikationstechnik GmbH IZT, 91058 Erlangen (DE)
(72) Erfinder: PERTHOLD, Rainer, 91085 Weisendorf (DE)
(74) Vertreter: Schenk, Markus
(86) Internationale Anmeldenummer: PCT/EP2008/007834
(87) Internationale Veröffentlichungsnummer: WO 2009/036981

(56) Entgegenhaltungen:
- WO-A1-94/21071
- WO-A2-2006/086214
- DE-A1- 3 836 814
- DE-A1- 4 330 425
- DE-A1- 10 016 483
- GB-A- 2 180 112
- US-A- 5 293 114
- US-A- 5 848 097
- US-A- 5 870 436
- US-A1- 2007 110 198
- US-A1- 2007 171 993
- Wikipediaeintrag 'Überabtastung'
- Wikipediaeintrag 'Schnelle Fourier-Transformation'

## Beschreibung

Die vorliegende Erfindung bezieht sich auf Vorrichtungen und Verfahren zum Empfangen von Informationssignalen mit einem Informationssignalspektrum, insbesondere auf Vorrichtungen und Verfahren zum Empfangen von breitbandigen Hochfrequenzsignalen.

Oftmals besteht ein Bedürfnis in einer Analyse eines Frequenzspektrums eines breitbandigen Informationssignals, wie z.B. eines breitbandigen Hochfrequenzsignals. Beträgt die Bandbreite des Hochfrequenzsignals beispielsweise einige 100 MHz oder gar GHz, so ist es mit derzeit herkömmlich verfügbaren Empfängern schwierig, das Hochfrequenzsignal so zu erfassen, dass eine Information über das komplette breitbandige Frequenzspektrum zur Verfügung steht.

Zwar sind aus dem Stand der Technik Empfänger mit einer digitalen Signalaufbereitung und der Möglichkeit, mehrere schmalbandige Signale aus einem breitbandigen Informationssignal zu extrahieren, bekannt. Wünschenswert wäre jedoch, eine Möglichkeit zur Erfassung des kompletten breitbandigen Frequenzspektrums des Informationssignals, ohne dafür entsprechend breitbandige und aufwendige Empfängerstrukturen entwerfen zu müssen.

Die US 5293114 beschreibt in dem Zusammenhang eine Mehrfrequenzschätzung, bei der die Bandbreite und Auflösung von auf einer Fast Fourier Transformation (FFT) basierenden Frequenzschätzungseinrichtungen begrenzt ist durch A/D-Wandler-Abtastrateneinschränkungen und ferner durch Echtzeit-Rechenanforderungen. Die offenbarte Konfiguration verwendet ein Modifizierten Chinesischen Restsatz (Modified Chinese Remainder Theorem) eines Dokuments mit dem Titel "A Noise Insensitive Solution to an Ambiguity Problem in Spectra Estimation" von McCormick et. al. und einen Teilabtastlösungsansatz (subsampling approach) des US-Patentdokuments Nr. 5,099,194 mit dem Titel "Digital Frequency Measurement Receiver With Bandwidth Improvement Through Multiple Sampling of Real Signals", um das Frequenz-Mehrdeutigkeitsproblem zu lösen. Die Konfiguration erstreckt diese Ideen auf den Mehrfrequenzfall. Dies erweitert die Systembandbreite wesentlich durch paralleles betreiben von I FFT Einheiten bei spezifischen Abtastraten, die ausgewählt sind, um die Systembandbreite für einen festen Pegel an Schallschutz zu maximieren. Jede FFT-Einheit-Ausgabe wird durch einen "Spitzenerfassungs"-Algorithmus verarbeitet, der die M Reste der M Frequenzen der Abtastfrequenz Fi dieser bestimmten FFT-Einheit erfasst. Unter Verwendung eines Mehrfrequenz-Mehrdeutigkeitsauflösungs-Algorithmus werden die M Frequenzen aus den I Sätzen der M Reste geschätzt. Die Konfiguration löst im Wesentlichen das 2(pi)- oder Aliasing-Mehrdeutigkeits-Problem für mehrere Frequenzen, auf parallele und hoch effiziente Weise. Mit seiner gegenwärtigen Konfiguration ist das System für komplexe Signaleingaben entworfen.

Die US 5848097 beschreibt ein Transceivergerät für ein drahtloses Kommunikationsnetz, das Mehrfrequenz-Kommunikationskanäle enthält zum Verwirklichen einer Echtzeit-Kommunikation zwischen einer Vielzahl von geographisch verteilten ersten Standorten mittels eines oder mehrerer Transceiverstandorte, wobei das Transceivergerät an einem jeweiligen Standort dieser Transceiverstandorte installierbar ist. Das Transceivergerät umfasst eine Empfängereinheit, um eine benachbarte Vielzahl der Mehrfrequenz-Kommunikationskanäle zu empfangen und ein digitales Signal auszugeben, das repräsentativ für den Inhalt der Vielzahl von Mehrfrequenz-Kommunikationskanälen ist, eine auf einer Fourier-Transformation basierende Channelizereinheit, um ein digitales Signal von der Empfängereinheit zu empfangen, und in Echtzeit jeweilige digitale Kanalsignale auszugeben, die repräsentativ für den Inhalt der jeweiligen Kanäle der von der Empfängereinheit empfangenen Kommunikationskanäle sind, eine erste Vielzahl von Signalprozessoreinheiten, die jeweils digitalen Kanalsignalen zugeordnet sind, die von der Channelizereinheit ausgegeben werden, und die jeweilige Signale der digitalen Kanalsignale verarbeiten, und verarbeitete Signale der digitalen Kanalsignale an ihren jeweiligen Ausgangsports ausgeben, eine zweite Vielzahl von Signalprozessoreinheiten, die jeweils Signalen einer Vielzahl von ankommenden Kommunikationssignalen zugeordnet sind, die über verschiedene benachbarte Frequenzsignale des Netzes gesendet werden sollen, um jeweilige Signale der Vielzahl von ankommenden Kommunikationssignalen zu verarbeiten, und verarbeitete Signale der Kommunikationssignale bei ihren jeweiligen Ausgangsports ausgeben, eine auf einer Fourier-Transformation basierende Kombinatoreinheit, um Kommunikationssignale zu empfangen, die von der zweiten Vielzahl von digitalen Signalprozessoreinheiten verarbeitet wurden, und um in Echtzeit ein kombiniertes Signal auszugeben, das repräsentativ für den Inhalt der Kommunikationssignale ist, die von der zweiten Vielzahl von digitalen Signalprozessoreinheiten verarbeitet wurden, und eine Sendereinheit, um ein Mehrfrequenz-Kommunikationssignal entsprechend dem kombinierten Signal zu senden, das von der auf einer Fourier-Transformation basierenden Kombinatoreinheit ausgegeben wurde.

Die Aufgabe der vorliegenden Erfindung besteht somit darin, die Erfassung des Frequenzspektrums eines Informationssignals, welches die Bandbreite eines herkömmlichen Empfängers überschreitet, zu ermöglichen.

Diese Aufgabe wird durch eine Vorrichtung gemäß Patentanspruch 1, ein Verfahren gemäß Patentanspruch 15 und ein Computerprogramm gemäß Patentanspruch 16 gelöst.

Die Erkenntnis der vorliegenden Erfindung besteht darin, dass das Erfassen des kompletten Frequenzspektrums eines breitbandigen Informationssignals, d.h. des Informationssignalspektrums, ermöglicht werden kann, indem unterschiedliche Teile des breitbandigen Informationssignals durch eine Mehrzahl gegeneinander verstimmter schmalbandigerer Empfänger erfasst werden und daraus resultierende Einzelsignale so kombiniert werden, dass das Spektrum eines resultierenden kombinierten Signals im Wesentlichen dem Informationssignalspektrum entspricht. Die Erfindung schafft eine Vorrichtung zum Empfangen eines Informationssignals mit einem Informationssignalspektrum, mit den Merkmalen "einer Mehrzahl von Empfängern zum Erzeugen jeweils eines Einzelsignals aus dem Informationssignal", wobei jeder der Mehrzahl von Empfängern einen Mischer zum Abwärtsmischen des Informationssignals mit einem jeweiligen Abwärtsmischsignal aufweist, und sich die Abwärtsmischfrequenzen der Abwärtsmischsignale unterscheiden, so dass Spektren der Einzelsignale jeweils einem unterschiedlichen Teil des Informationssignalspektrums entsprechen; und "einer Einrichtung zum Transformieren der Einzelsignale in den Frequenzbereich", die ausgebildet ist, um Signalabschnitte der Einzelsignale jeweils mittels einer Fast-Fourier-Transformation aus einem Zeitbereich in einen Frequenzbereich zu transformieren. Hier entspricht ein Frequenz-Offset zwischen zwei benachbarten Abwärtsmischsignalen einem ganzzahligen Vielfachen eines Binabstandes der Fast-Fourier-Transformation entspricht. Ferner umfasst die Vorrichtung eine "Einrichtung zum Kombinieren der in den Frequenzbereich transformierten Einzelsignale in ein kombiniertes Signal", die ausgebildet ist, um Frequenzbereiche der in den Frequenzbereich transformierten Einzelsignale entsprechend den in den Frequenzbereich transformierten Einzelsignalen um die unterschiedlichen Abwärtsmischfrequenzen zugeordneten Frequenzverschiebungen zu verschieben, so dass das Spektrum des kombinierten Signals das Informationssignalspektrum nachbildet.

Die Erfindung kann auch Verfahren zum Empfangen eines Informationssignals mit einem Informationssignalspektrum definiert sein und weist dann folgenden Schritte auf:
- Erzeugen einer Mehrzahl von Einzelsignalen aus dem Informationssignal mittels einer Mehrzahl von Empfängern, wobei jeder der Mehrzahl von Empfängern einen Mischer zum Abwärtsmischen des Informationssignals mit Abwärtsmischsignalen mit unterschiedlichen Abwärtsmischfrequenzen aufweist, so dass Spektren der Einzelsignale jeweils einem unterschiedlichen Teil des Informationssignalspektrums entsprechen; und
- Transformieren der Einzelsignale in den Frequenzbereich, die ausgebildet ist, um Signalabschnitte der Einzelsignale jeweils mittels einer Fast-Fourier-Transformation aus einem Zeitbereich in einen Frequenzbereich zu transformieren, wobei ein Frequenz-Offset zwischen zwei benachbarten Abwärtsmischsignalen einem ganzzahligen Vielfachen eines Binabstandes der Fast-Fourier-Transformation entspricht; und
- Kombinieren der Mehrzahl von in den Frequenzbereich transformierten Einzelsignalen in ein kombiniertes Signal mittels Verschieben von Frequenzbereichen der in den Frequenzbereich transformierten Einzelsignale entsprechend den in den Frequenzbereich transformierten Einzelsignalen um die unterschiedlichen Abwärtsmischfrequenzen zugeordneten Frequenzverschiebungen, so dass das Spektrum des kombinierten Signals dem Informationssignalspektrum entspricht.

Bei Ausführungsbeispielen der vorliegenden Erfindung werden durch die Mehrzahl der gegeneinander verstimmten Empfänger jeweils unterschiedliche Teile des breitbandigen Informationssignals in ein tiefer liegendes Frequenzband gebracht und dort derart kombiniert, dass das resultierende Gesamtspektrum zumindest näherungsweise dem Informationssignalspektrum entspricht. Dabei können die unterschiedlichen Teile des breitbandigen Informationssignals, d.h. die Einzelsignale, direkt ins Basisband oder über eine Zwischenfrequenz ins Basisband gemischt werden.

Bei Ausführungsbeispielen der vorliegenden Erfindung werden durch eine Abwärtsmischung des breitbandigen Informationssignals mit unterschiedlichen Abwärtsmisch- bzw. Lokaloszillatorfrequenzen unterschiedliche Teile des breitbandigen Informationssignals in einen durch ein Bandpassfilter definierten Zwischenfrequenzbereich transformiert. Die resultierenden unterschiedlichen Zwischenfrequenzsignale, deren Bandbreite gegenüber der Bandbreite des ursprünglichen Informationssignalspektrums verkleinert ist, können anschließend durch einen Analog-Digital Umsetzer in einer Art Bandpassabtastung analog-digital gewandelt werden. Dabei entspricht die Bandpassabtastung einer Art Unterabtastung, bei der durch den Alias-Effekt auch Alias-Bänder in unteren Frequenzbereichen entstehen. Eine weitere Verarbeitungsfrequenz kann dann im Bereich des untersten Alias-Bandes, welches bei geschickt gewählten Zwischen- und Abtastfrequenzen dem Basisband entsprechen kann, angesetzt werden.

Optional können die jeweiligen digitalisierten Zwischenfrequenzeinzelsignale auch mittels eines NCO (NCO = Numerically Controlled Oscillator) und eines digitalen Mischers ins komplexe Basisband mit Mittenfrequenz 0 Hz umgesetzt werden. In diesem Fall wird die Abwärtsmischung des breitbandigen Informationssignals also mit unterschiedlichen Abwärtsmischsignalen, die sich jeweils aus einem Lokaloszillatorsignal und einem digitalen NCO-Signal zusammensetzen, bewerkstelligt. Die daraus resultierenden digitalen Basisbandeinzelsignale können in einem weiteren optionalen Schritt jeweils mit einem digitalen Tiefpassfilter begrenzt werden. Bei einem Ausführungsbeispiel der vorliegenden Erfindung beträgt die Bandbreite eines digitalen Tiefpassfilters rund 80 % der Nyquist-Bandbreite, d.h. der Bandbreite der bandpassgefilterten Zwischenfrequenzsignale.

Bei Ausführungsbeispielen der vorliegenden Erfindungen werden die Filterflanken der Tiefpassfilter möglichst so gewählt, dass sie punktsymmetrisch sind.

In einem weiteren Schritt werden die tiefpassgefilterten digitalen Basisbandeinzelsignale aus dem diskreten Zeitbereich in den diskreten Frequenzbereich transformiert. Dies erfolgt vorzugsweise mittels einer FFT (FFT = Fast Fourier Transformation). Die in den Frequenzbereich transformierten Basisbandeinzelsignale können nun noch jeweils entzerrt werden, so dass durch die jeweils vorhergehende Signalverarbeitung resultierende Verzerrungen der Einzelsignale ausgeglichen werden können.

Des Weiteren können die Einzelsignale im Frequenzbereich derart manipuliert werden, dass sich bei einer anschließenden frequenzmäßig richtigen Kombination der Einzelsignale im Frequenzbereich zu dem Informationssignalspektrum innerhalb von Überlappungsbereichen zwischen den Einzelspektren keine unerwünschten Amplitudenverstärkungen oder Phasenverzerrungen ergeben.

Um die Einzelsignale im Frequenzbereich kombinieren zu können, werden sie entsprechend ihren unterschiedlichen Abwärtsmischfrequenzen im Frequenzbereich verschoben, so dass sich das gewünschte breitbandige Informationssignalspektrum als Kombinationsresultat ergibt. Dabei ergeben sich die jeweiligen Abwärtsmischfrequenzen aus den Frequenzen der entsprechenden (analogen) Lokaloszillatorsignale und/ oder den Frequenzen der entsprechenden (digitalen) NCO-Signale. Das resultierende, breitbandige Informationssignalspektrum kann nun weiterverarbeitet werden, indem beispielsweise einzelne Spektralanteile daraus betrachtet werden.

Ausführungsbeispiele der vorliegenden Erfindung, welche eine Verarbeitung im Frequenzbereich nutzen, können deutlich effektiver sein als Ausführungsbeispiele mit einer Verarbeitung nur im Zeitbereich.

Übliche Empfängerarchitekturen weisen mit zunehmender Bandbreite der Empfänger Schwächen wie zunehmende Störsignale und Frequenzgangfehler auf. Weiterhin nimmt eine Rate zu, mit der Ausgangsdaten anfallen, und die Weiterverarbeitung innerhalb des Geräts wird damit schwieriger. Mit Ausführungsbeispielen der vorliegenden Erfindung lassen sich sowohl große Bandbreiten erfassen, als auch eine hohe Qualität der Erfassung erreichen.

Ein weiterer Vorteil der vorliegenden Erfindung besteht darin, dass Ausführungsbeispiele gut skalierbar sind. Für eine Erweiterung eines detektierbaren Frequenzbereichs können entsprechend viele Einzelempfänger miteinander verbunden werden. In diesem Fall werden lediglich frequenzmäßig benachbarte Empfänger miteinander gekoppelt.

Bevorzugte Ausführungsbeispiele der vorliegenden Erfindung werden nachfolgend Bezug nehmend auf die beiliegenden Zeichnungen näher erläutert. Es zeigen:
- Fig. 1: ein Blockdiagramm einer Vorrichtung zum Erfassen eines breitbandigen Informationssignals gemäß ei- nem Ausführungsbeispiel der vorliegenden Erfin- dung;
- Fig. 2: ein Blockdiagramm einer Vorrichtung zum Erfassen eines breitbandigen Informationssignals gemäß ei- nem weiteren Ausführungsbeispiel der vorliegenden Erfindung;
- Fig. 3: ein detailliertes Blockdiagramm einer Vorrichtung zum Erfassen eines Informationssignals gemäß ei- nem weiteren Ausführungsbeispiel der vorliegenden Erfindung;
- Fig. 4a: eine schematische Darstellung eines breitbandigen Informationssignalspektrums;
- Fig. 4b: eine Darstellung von zwei mit unterschiedlichen Lokaloszillatorsignalen aus dem Informationssig- nal gemäß Fig. 4a gewonnenen Zwischenfrequenzsig- nalen;
- Fig. 4c: eine schematische Darstellung eines aus einer Bandpassabtastung der Zwischenfrequenzsignale ge- mäß Fig. 4b resultierenden Frequenzspektrums;
- Fig. 5: eine schematische Darstellung zur Erläuterung der Funktionsweise einer Nullenergänzungsvorschrift gemäß einem Ausführungsbeispiel der vorliegenden Erfindung;
- Fig. 6: ein Blockdiagramm zur Veranschaulichung einer Er- zeugung phasenstarrer Lokaloszillatorsignale mit unterschiedlichen Lokaloszillatorfrequenzen;
- Fig. 7: eine schematische Darstellung zur Erläuterung der Erweiterung des Basisbandfrequenzbereichs der Einzelsignale zu einem Ausgangsignalfrequenzbe- reich gemäß einem Ausführungsbeispiel der vorlie- genden Erfindung;
- Fig. 8: ein Blockdiagramm einer Vorrichtung zum Erfassen eines Informationssignals mit nachgeschalteter Signalverarbeitung gemäß einem weiteren Ausfüh- rungsbeispiel der vorliegenden Erfindung; und
- Fig. 9: ein Blockdiagramm einer Vorrichtung zum Erfassen eines Informationssignals durchgehend im Zeitbe- reich gemäß einem weiteren Ausführungsbeispiel der vorliegenden Erfindung.

Bezüglich der nachfolgenden Beschreibung sollte beachtet werden, dass bei den unterschiedlichen Ausführungsbeispielen gleiche oder gleichwirkende Funktionselemente gleiche Bezugszeichen aufweisen und somit die Beschreibung dieser Funktionselemente in den verschiedenen, in den nachfolgend dargestellten Ausführungsbeispielen untereinander austauschbar sind.

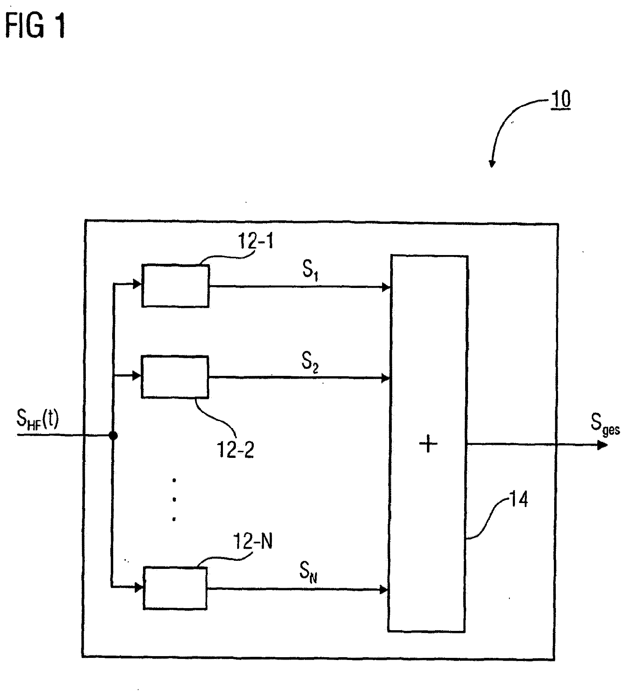

Fig. 1 zeigt ein Blockschaltbild einer Vorrichtung zur Erfassung eines breitbandigen Informationssignals sHF(t) gemäß einem Ausführungsbeispiel der vorliegenden Erfindung.

Die Vorrichtung 10 weist eine Mehrzahl von Empfängern 12-n (n=1,2,...,N) zum Erzeugen jeweils eines Einzelsignals Sₙ (n=1,2,...,N) aus dem Informationssignal s_{HF}(t) mit einem Informationssignalspektrums S_{HF}(f) auf. Die Empfänger 12-n (n=1,2,...,N) weisen jeweils einen Mischer zum Abwärtsmischen des Informationssignals S_{HF}(t) mit Abwärtsmischsignalen mit unterschiedlichen Abwärtsmischfrequenzen f_{LO,n} (n=1,2,..., N) auf, so dass Spektren Sₙ(f) (n = 1, 2, ...,N) der abwärtsgemischten Einzelsignale Sₙ (n=1,2,...,N) jeweils einem unterschiedlichen Teil des Informationssignalspektrums S_{HF}(f) im entsprechen. Ferner weist die Vorrichtung 10 eine Einrichtung 14 zum Kombinieren der Einzelsignale Sₙ in ein kombiniertes Signal S_{ges} auf, so dass das Spektrum des kombinierten Signals S_{ges}(f) im Wesentlichen dem Informationssignalspektrum S_{HF}(f) entspricht.

Für eine Signalverarbeitung im Frequenzbereich kann die Vorrichtung 10 zum Empfangen des Informationssignals s_{HF}(t) gemäß Ausführungsbeispielen auch eine Einrichtung zum Transformieren der Einzelsignale sₙ in den Frequenzbereich aufweisen.

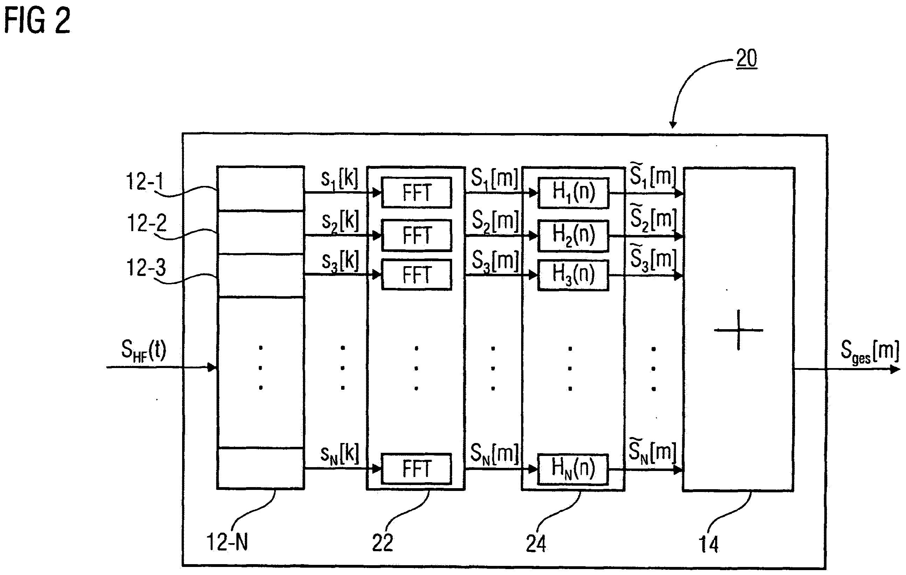

Dazu zeigt Fig. 2 ein weiteres Ausführungsbeispiel einer Vorrichtung 20 zum Empfangen des breitbandigen Informationssignals s_{HF}(t).

Die Vorrichtung 20 umfasst eine Mehrzahl von Empfängern 12-n (n=1,2,..., N) zum Bereitstellen einer Mehrzahl von zeitdiskreten Basisbandeinzelsignalen Sₙ[k] (n=1,2,..., N), eine Einrichtung 22 zum Transformieren der zeitdiskreten Basisbandeinzelsignalen Sₙ[k] (n=1,2,..., N) in einem frequenzdiskreten Basisbandfrequenzbereich, eine Einrichtung 24 zur komplexwertigen spektralen Gewichtung der in den Basisbandfrequenzbereich transformierten Einzelsignale Sₙ[m] (n=1,2,..., N) und eine Einrichtung 14 zum Kombinieren der verarbeiteten, in den Basisbandfrequenzbereich transformierten Einzelsignale *S̃ₙ* [m] (n=1,2,..., N) in ein kombiniertes Signal S_{ges}[m] im Basisbandfrequenzbereich.

Das breitbandige Informationssignalspektrum S_{HF}(f) des Informationssignals S_{HF}(t) wird auf die Mehrzahl der Empfänger 12-n (n=1,2,..., N) aufgeteilt. Durch Abwärtsmischsignale mit unterschiedlichen Abwärtsmischfrequenzen f_{LO,n} (n=1,2,..., N) erfassen die Empfänger 12-n (n=1,2,..., N) jeweils einen unterschiedlichen Teil des Informationssignals s_{HF} (t) bzw, des Informationssignalspektrums S_{HF}(f). Gemäß Ausführungsbeispielen werden die unterschiedlichen Teile des Informationssignals s_{HF}(T) durch die Mehrzahl von Empfängern 12-n (n=1,2,..., N) in den digitalen Basisbandbereich gebracht, so dass N unterschiedliche zeitdiskrete Basisbandeinzelsignale sₙ[k] (n=1,2,..., N) resultieren. Durch eine diskrete Fourier-Transformation (DFT), welche mittels einer FFT implementiert werden kann, werden die N zeitdiskreten Basisbandeinzelsignale sₙ[k] (n=1,2,..., N) in N frequenzdiskrete Basisbandeinzelsignale Sₙ[m] (n=1,2,..., N) transformiert. Durch die Einrichtung 24 zum komplexwertigen spektralen Gewichten können die frequenzdiskreten Basisbandeinzelsignale Sₙ[m] (n=1,2,..., N) beispielsweise mittels Entzerrerfilter von Signalverzerrungen durch die jeweils davor liegende Signalverarbeitungskette befreit werden. Durch anschließendes frequenzrichtiges Kombinieren der verarbeiteten frequenzdiskreten Einzelsignale *S̃ₙ* [m] (n=1,2,..., N) und Berücksichtigung von Frequenzüberlappungsbereichen frequenzmäßig benachbarter Einzelsignale kann das Informationssignalspektrum S_{HF}(f) des Informationssignals s_{HF}(t) beispielsweise im Basisband rekonstruiert werden.

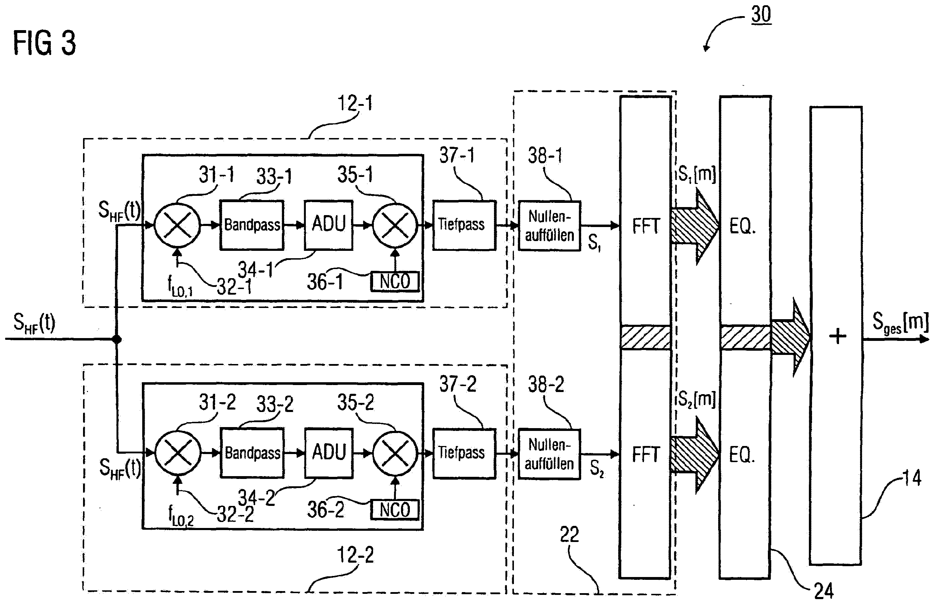

Eine detaillierte Beschreibung der in Fig. 2 für den allgemeinen Fall von N Einzelsignalen dargestellten Vorrichtung 20 erfolgt im Nachfolgenden anhand der Fig. 3 bis 5 für den speziellen aber nicht einschränkenden Fall N = 2.

Fig. 3 zeigt eine Vorrichtung 30 zum Erfassen des Informationssignals s_{HF}(t) gemäß einem weiteren Ausführungsbeispiel der vorliegenden Erfindung.

Die Vorrichtung 30 weist bei dem dargestellten Ausführungsbeispiel zwei Empfänger 12-1 und 12-2 auf. Zeitdiskrete Ausgangssignale sₙ[k] (n=1,2) der beiden Empfänger 12-1 und 12-2 werden der Einrichtung 22 zum Transformieren zugeführt, deren frequenzdiskrete Ausgangssignale Sₙ[m] (n=1,2) wiederum der Einrichtung 24 zum komplexwertigen spektralen Gewichten zugeführt werden. Deren frequenzdiskrete Ausgangssignale *S̃ₙ* [m] (n=1,2) werden der Einrichtung 14 zum Kombinieren zur Verfügung gestellt, um an deren Ausgang ein kombiniertes frequenzdiskretes Signal S_{ges[}m] zu erhalten.

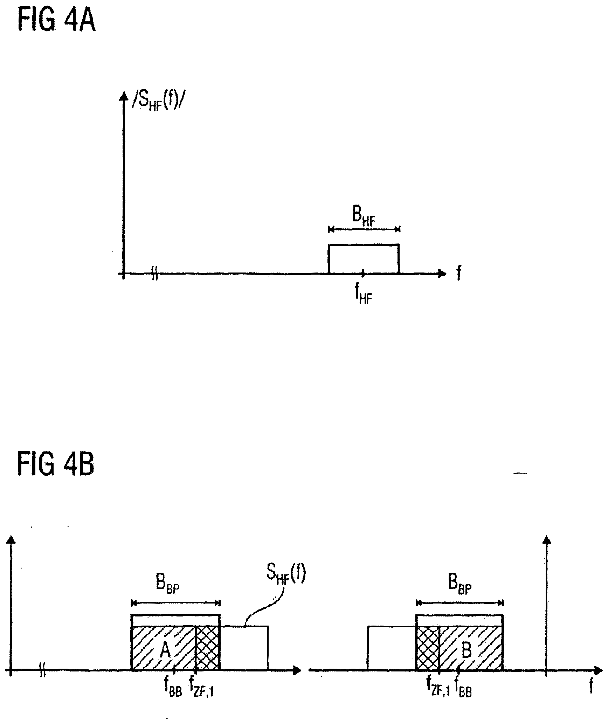

Die beiden Empfänger 12-n (n = 1,2) weisen jeweils einen Mischer mit einem Lokaloszillator 31-n (n = 1,2) auf, um das breitbandige Informationssignal s_{HF}(t) jeweils mit einem unterschiedlichen Lokaloszillatorsignal 32-n (n = 1,2) mit unterschiedlichen Abwärtsmisch- bzw. Lokaloszillatorfrequenzen f_{LO,n} (n = 1,2) auf eine feste, vordefinierte Zwischenfrequenz f_{ZF} abwärts zu mischen. Die Zwischenfrequenz f_{ZF} bildet gemäß Ausführungsbeispielen eine Mittenfrequenz eines Bandpassfilters 33-n (n = 1,2), wobei die Bandpassfilter 33-1 und 33-2 bzw. deren Charakteristika gemäß Ausführungsbeispielen identisch sind. Durch die unterschiedlichen Abwärtsmisch- bzw. Lokaloszillatorfrequenzen f_{LO,n} (n = 1,2) kommen jeweils unterschiedliche Teile des Informationssignalspektrums in dem Durchlassbereich der Bandpassfilter 33-n (n = 1,2) zu liegen. Dieser Sachverhalt ist in den Fig. 4a und 4b verdeutlicht.

Fig. 4a zeigt schematisch das breitbandige Informationssignalspektrum S_{HF}(f) des Informationssignals s_{HF}(t) mit Mittenfrequenz f_{HF} und Bandbreite B_{HF}.

Fig. 4b (links) zeigt schematisch das Resultat des Mischens des Informationssignals s_{HF} (t) mit dem Lokaloszillatorsignal 32-1 mit der Frequenz f_{LO},₁, welche in dem hier gezeigten Fall leicht unterhalb der Mittenfrequenz f_{HF} liegt. Dabei ist die Lokaloszillatorfrequenz f_{LO,1} derart gewählt, dass ein unterer Teil A des Spektrums S_{HF} (f) in dem Durchlassbereich des Bandpassfilters 33-1 mit Bandbreite B_{BP} zu liegen kommt. Um den unteren Teil A des Informationssignalspektrums zu erhalten, wird also in dem vorliegenden Beispiel die Lokaloszillatorfrequenz f_{LO,1} leicht unterhalb der Mittenfrequenz f_{HF} des Informationssignals gewählt.

Um einen oberen Teil B des Informationssignalspektrums S_{HF}(f) im Durchlassbereich des Bandpassfilters 33-2 zu erhalten, wird in dem zweiten Empfänger 12-2 das Informationssignal s_{HF}(t) mit einem zu dem Lokaloszillatorsignal 32-1 unterschiedlichen Lokaloszillatorsignal 32-2 mit einer unterschiedlichen Lokaloszillatorfrequenz f_{LO,2} gemischt. Da hier der obere Teil des Spektrums S_{HF}(f) in dem Bandpassfilterdurchlassbereich mit der Bandbreite B_{BP} zu liegen kommen soll, ist f_{LO,2} gegenüber f_{LO,1} leicht erhöht. Zudem ist in dem in Fig. 4b (rechts) gezeigten Beispiel die Lokaloszillatorfrequenz f_{LO,2} gegenüber der Mittenfrequenz f_{HF} des Informationssignals erhöht, so dass das Spektrum S_{HF}(f) zu einer negativen Zwischenfrequenz f_{ZF,2} hin verschoben wird. Der Übersichtlichkeit halber wurde in Fig. 4b jeweils auf die Darstellung der Spiegelfrequenzbereiche verzichtet.

Da in dem vorliegenden Beispiel die Bandbreite B_{BP} der Bandpassfilter 33-n (n = 1,2) größer als B_{HF}/2 ist, gibt es in den Teilspektren A bzw. B jeweils einen Bereich (in Fig. 4b jeweils kreuzschraffiert dargestellt), der die selben Informationen beinhaltet. Dieser Bereich soll im Nachfolgenden als Überlappungsbereich bezeichnet werden.

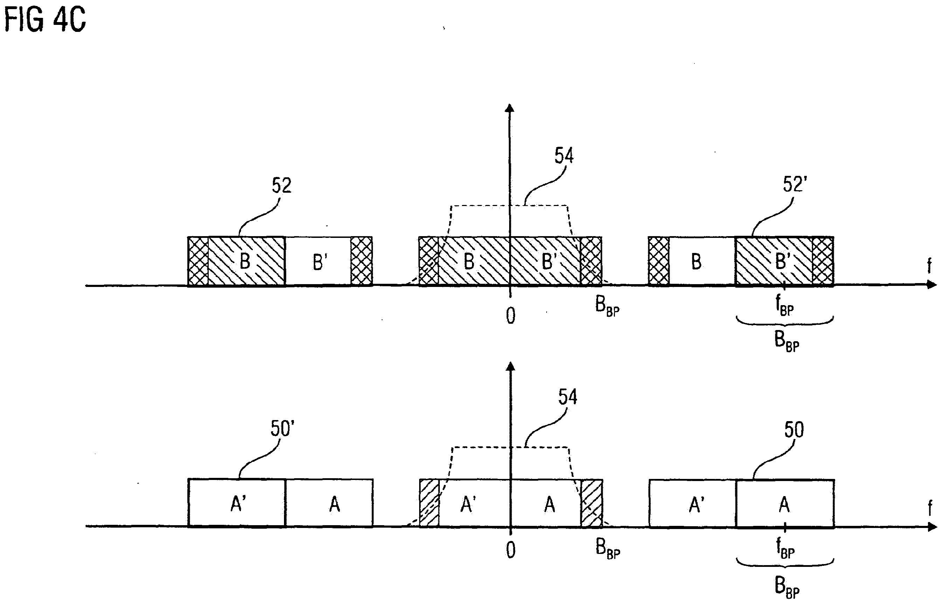

Nach dem Abwärtsmischen und der Bandpassfilterung in den beiden Empfängern 12-1 und 12-2 folgt nun jeweils eine Analog-Digital-Wandlung der Zwischenfrequenzsignale mittels der in Fig. 3 dargestellten Analog-Digital-Wandler 34-1 bzw. 34-2. Dabei sind die Digital-Analog-Wandler 34-n (n = 1,2) angepasst, um die analogen Zwischenfrequenzsignale wenigstens mit der Nyquist-Abtastrate, entsprechend der Bandbreite B_{BP}, abzutasten. Dies entspricht im Allgemeinen einer Unterabtastung der Zwischenfrequenzsignale, durch die es zu einem Alias-Effekt kommt. Durch den Alias-Effekt entstehen auch Bänder in unteren Frequenzbereichen. Dieser Sachverhalt ist schematisch in Fig. 4c für die beiden Empfangszweige dargestellt.

Mit den Bezugszeichen 50 bzw. 50' ist das Spektrum bzw. das Spiegelspektrum der Zwischenfrequenzeinzelsignale nach der Bandpassfilterung mit dem Bandpassfilter 33-1 gekennzeichnet. Dabei entspricht der mit dem Bezugszeichen 50' gekennzeichnete Teil dem Spiegelbild des mit Bezugszeichen 50 gekennzeichneten unteren Teils A des Informationssignalspektrums S_{HF}(f) im Zwischenfrequenzbereich. Gleichermaßen entspricht der mit Bezugszeichen 52' gekennzeichnete Bereich dem Spiegelbild des mit Bezugszeichen 52 gekennzeichneten oberen Teils B des Informationssignalspektrums S_{HF}(f) im Zwischenfrequenzbereich.

Durch Abtastung der analogen, bandpassgefilterten Zwischenfrequenzsignale mit einer geeigneten Abtastfrequenz f_{A} ergibt sich durch den Alias-Effekt das in Fig. 4c dargestellte Frequenzspektrum für die beiden abgetasteten Bandpasssignale. In dem in Fig. 4c gezeigten Beispiel kommt es durch eine vorteilhafte Wahl der Abtastfrequenz f_{A} der beiden Analog-Digital-Wandler 34-n (n = 1,2) zu Wiederholungen der Teilspektren A, A' und B, B' im Basisbandfrequenzbereich um die Frequenz 0 Hz. Auf eine Darstellung weiterer Alias-Bänder wurde der Übersichtlichkeit halber verzichtet.

Bei einer anderen Wahl der Lokaloszillatorfrequenzen f_{LO,n} (n = 1,2) und/oder der Abtastfrequenz f_{A}, können sich andere Signalkonstellationen, als in Fig. 4c dargestellte, ergeben. Unter Umständen kann es daher vorteilhaft sein, die jeweils abgetasteten Zwischenfrequenzsignale nach dem Analog-Digital-Wandler 34-n (n = 1,2) jeweils noch digital ins komplexe Basisband zu mischen. Dazu kann die Mehrzahl von Empfängern 12-n (n = 1,2) jeweils eine Einrichtung zum digitalen Mischen 35-n (n = 1,2) und einen numerisch kontrollierten Oszillator (NCO) 36-n (n = 1,2) aufweisen, um die abgetasteten Zwischenfrequenzsignale um eine einstellbare Frequenz des NCO 36-n (n = 1,2) verschieben zu können. In diesem Fall setzen sich die einzelnen Abwärtsmischsignale aus den Lokaloszillatorsignalen und den NCO-Signalen zusammen, da das Informationssignal bzw. ein Teil des Informationssignal sowohl durch die Lokaloszillatoren als auch durch die NCO's abwärts gemischt wird. Dementsprechend setzen sich in diesem Fall auch die Abwärtsmischfrequenzen aus den Lokaloszillatorfrequenzen und den Frequenzen der NCO-Signale (additiv) zusammen.

Gemäß Ausführungsbeispielen weist die Mehrzahl von Empfängern 12-n (n = 1,2) jeweils ein digitales Tiefpassfilter 37-n (n = 1,2) mit punktsymmetrischen Filterflanken und einer Filterbandbreite B_{TP} in einem Bereich von 0,6B_{BP} < B_{TP} < B_{BP}, z.B. 0,8B_{BP}, auf. In Fig. 4c ist jeweils die Übertragungsfunktion eines solchen Tiefpassfilters mit dem Bezugszeichen 54 gekennzeichnet. Durch die punktsymmetrischen Filterflanken können Teile der Überlappungsbereiche der unteren und oberen Teilspektren A, B entfernt werden, so dass sich bei einer späteren Überlagerung der unteren und oberen Teilspektren A, B deren Amplituden in den Überlappungsbereichen zu 1 bzw. dem ursprünglichen Wert ergänzen.

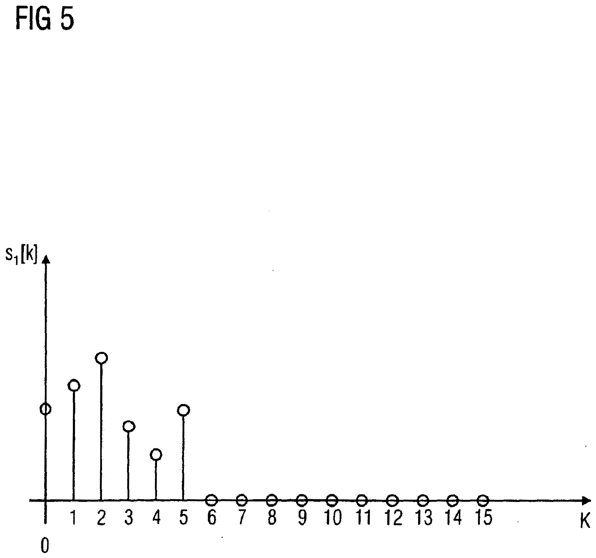

An dieser Stelle sei erwähnt, dass die Tiefpassfilter 37-n (n = 1,2) lediglich optional sind, da die anhand der Fig. 5c beschriebene Formung der Teilspektren A, B bzw. deren Übergangsbereiche, auch durch eine nachfolgende Signalverarbeitung im Frequenzbereich bewerkstelligt werden könnte, wie es später noch beschrieben wird.

Um die tiefpassgefilterten, komplexen, zeitdiskreten Basisbandsignale s₁[k], s₂[k] jeweils mit einem Filter mit einer endlichen Impulsantwort h₁[k] bzw. h₂[k] zu filtern, wie z.B. einem Entzerrerfilter, kann erfindungsgemäß eine blockweise schnelle Faltung verwendet werden, bei welcher das zu filternde Signal sₙ[k] (n=1,2) jeweils in Segmente der Länge L aufgeteilt wird. Jedes Segment kann mit der endlichen Impulsantwort hₙ[k] (n=1,2) der Länge P gefaltet werden und die gefilterten Segmente können dann wieder in einer passenden Art und Weise zugammengesetzt werden. Besitzt ein Segment des zu filternden Signals sₙ[k] (n=1,2) also die Länge L und die Impulsantwort hₙ[k] (n=1,2) die Länge P, so besitzt die lineare Faltung dieser beiden Folgen die endliche Länge (L+P-1). Da die DFT der Faltung der beiden Folgen, welche (L+P-1) Abtastwerte lang ist, die DFT der linearen Faltung von sₙ[k) und hₙ[k] (n=1,2) beschreiben soll, muss auch jeweils die DFT von einem Segment des zu filternden Signals sₙ[k] und hₙ[k] (n=1,2) für diese Länge (L+P-1) berechnet werden. D.h. sowohl die Segmente von sₙ[k] als auch hₙ[k] (n=1,2) werden vorteilhaft mit einer Folge von Nullen verlängert. Dieser Prozess wird im Allgemeinen als Nullenergänzung (Zero Padding) bezeichnet. Um dies zu bewerkstelligen, umfasst gemäß Ausführungsbeispielen die Einrichtung 22 zum jeweiligen Transformieren jeweils einen sogenannten Zero-Padding-Block 38-n (n = 1,2), um Signalabschnitte der Einzelsignale sₙ[k] (n=1,2) in mit Nullen ergänzter Form zu transformieren. Durch die Zero-Padding-Blöcke 38-n (n = 1,2) werden die einzelnen Signalblöcke der tiefpassgefilterten zeitdiskreten Basisbandsignale sₙ[k] (n=1,2) jeweils auf eine Länge von L_{FFT} = (L+P-1) gebracht, um eine blockweise Faltung der tiefpassgefilterten Basisbandeinzelsignale sₙ[k] (n=1,2) mit einer Impulsantwort hₙ[k] (n=1,2) der Länge P zu bewerkstelligen, wobei diese Faltung zur Komplexitätsreduktion bei Ausführungsbeispielen im Frequenzbereich stattfindet.

Fig. 5 zeigt beispielhaft ein Segment eines Signals S1 der Länge L=6, welches durch Nullen ergänzt wird, um eine Länge L_{FFT}=16 zu erhalten.

Zur Berechnung der schnellen Faltung werden die Nullstellen ergänzten Segmente sₙ[k] (n=1,2) der Länge L_{FFT,n} jeweils mit einem FFT-Algorithmus zur effizienten Berechnung der FFT in der Einrichtung 22 zur Transformation in den Frequenzbereich transformiert. Dabei ist die Länge L_{FFT,n} der FFT konfigurierbar. Gemäß Ausführungsbeispielen der vorliegenden Erfindung können zur Berechnung der FFT verschiedene Algorithmen verwendet werden, beispielsweise Radix-2^{x}-Algorithmen (x=1,2, ...), oder aber auch der Winograd-Algorithmus. Die Wahl des FFT-Algorithmus hängt dabei u.a. von der Länge L_{FFT,n} der FFT ab.

Die in den Frequenzbereich transformierten Einzelsignalsegmente Sₙ [m] (m=1, 2, ...,_{LFFT,n}; n=1,2) des FFT-Blocks 22 werden nun jeweils mit einer frequenztransformierten Impulsantwort Hₙ[m] (m=1,2,...,_{LFFT,n}; n=1,2) multipliziert, was einer Faltung im Zeitbereich entspricht. Dabei stellt Hₙ[m] (m=1,2,...,L_{FFT,n}; n=1,2) jeweils die frequenztransformierte Impulsantwort hₙ[k] (n=1,2) eines Entzerrerfilters dar.

Mittels der Entzerrer Hₙ[m] (n=1,2) können Verzerrungen, die durch die Signalverarbeitung der jeweils vorhergehenden Empfängerkette hervorgerufen werden, kompensiert werden. Sowohl Frequenzgänge der jeweils vorhergehenden Empfängerkette als auch dadurch hervorgerufene Phasendrehungen können durch die jeweiligen Entzerrerfilter Hₙ[m] (n=1,2) behoben werden.

Des Weiteren ist es gemäß Ausführungsbeispielen möglich, mit den Filtern Hₙ[m] (n=1,2) die bereits anhand von Fig. 4c beschriebene Tiefpassformung der Spektren der abgetasteten Zwischenfrequenzsignale derart vorzunehmen, dass sie sich bei einer anschließenden frequenzrichtigen Überlagerung im Überlappungsbereich amplitudenmäßig richtig aufaddieren. Weiterhin kann durch die Filter Hₙ[m] (n=1,2) sichergestellt werden, dass die Einzelsignale zueinander nur minimales Phasenrauschen aufweisen, indem jeweils durch die vorhergehende Empfängerkette hervorgerufene Phasendrehungen durch die jeweiligen Entzerrerfilter Hₙ[m] (n=1,2) behoben werden.

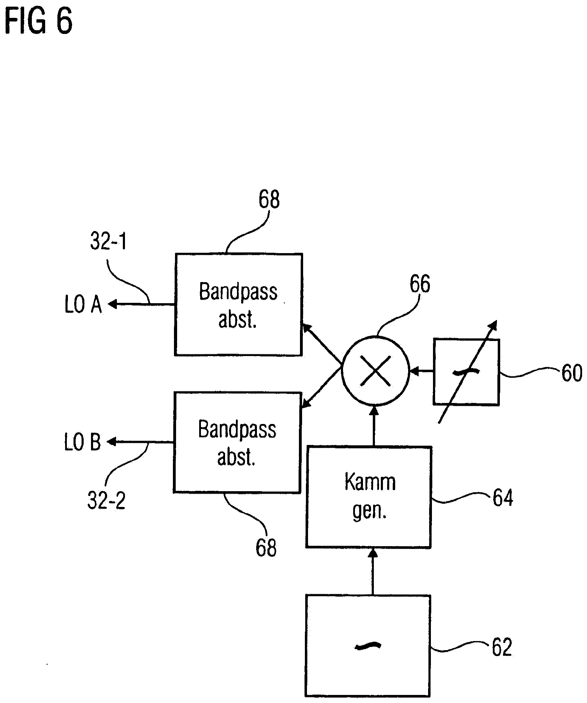

Geringes Phasenrauschen der Einzelsignale zueinander kann ebenfalls erreicht werden, indem die Lokaloszillatorsignale 32-n (n = 1,2) zueinander ein geringes Phasenrauschen aufweisen. Eine Möglichkeit, dies zu erreichen, ist in Fig. 6 dargestellt.

Fig. 6 zeigt eine Einrichtung zum Erzeugen der Lokaloszillatorsignale 32-n (n = 1,2). Die Lokaloszillatorsignale 32-n (n = 1,2) liegen gemäß Ausführungsbeispielen in einem Bereich von mehreren GHz. Mit einem abstimmbaren Oszillator 60 wird ein möglichst sinusförmiges Oszillatorsignal erzeugt, das in etwa in dem benötigen Frequenzbereich der Lokaloszillatorsignale 32-n (n = 1,2) liegt. Mit einem weiteren Oszillator 62 und einem Kammgenerator 64 kann ein Frequenzkamm mit einem Linienspektrum mit einem Abstand Δf_{LO} zwischen einzelnen Spektrallinien erzeugt werden. Die beiden erzeugten Signale werden in einem Mischer 66 gemischt. Mit Hilfe von abstimmbaren Bandpassfiltern 68 (z.B. YIG-Filter, YIG = Yttrium Iron Garnet, Yttrium-Eisen-Granat, Y₃Fe₅O₁₂) extrahiert man jeweils die Lokaloszillatorsignale 32-n (n = 1,2).

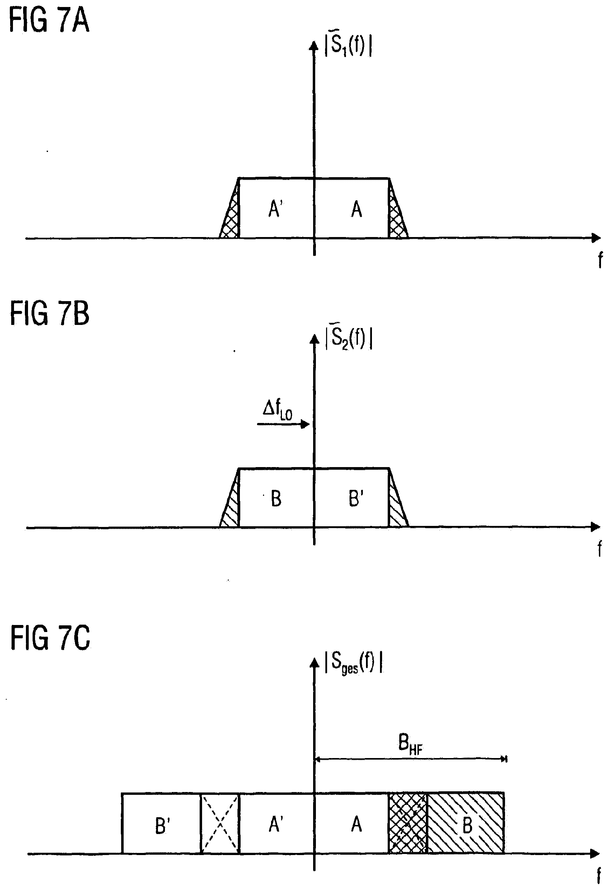

Bezugnehmend auf Fig. 3 werden nach der Verarbeitung der frequenzdiskreten Einzelsignale Sₙ[m] (m=1,2,...,L_{FFT,n}; n=1,2) mit den Entzerrerfiltern Hₙ[m] (n=1,2) die verarbeiteten frequenzdiskreten Einzelsignale *S̃ₙ*(n=1,2) in der Einrichtung 14 zum Kombinieren derart kombiniert, dass das frequenzdiskrete Spektrum des resultierenden kombinierten Signals S_{ges} [m] (m=1, 2, ..., L_{FFT}) im Wesentlichen dem ursprünglichen Informationssignalspektrum S_{HF}(f) entspricht. Dieser Sachverhalt soll anhand Fig. 7 näher erläutert werden.

Fig. 7a zeigt schematisch das Basisbandspektrum des verarbeiteten frequenzdiskreten Einzelsignals *S̃*₁(f). Des Weiteren zeigt Fig. 7b das Spektrum des frequenzdiskreten verarbeiteten Einzelsignals *S̃*₂(f). Dabei wurde jeweils durch Filterung mit dem Tiefpassfilter 37-n (n = 1,2) bzw. durch Filterung mit dem Entzerrerfilter Hₙ[m] (n=1,2) das Spektrum derart geformt, dass die Überlagerungsbereiche jeweils punktsymmetrisch sind, so dass sie sich bei einer frequenzrichtigen Kombination zur ursprünglichen Amplitude des ursprünglichen Informationssignalspektrums aufaddieren.

Zur frequenzrichtigen Kombination kann nun beispielsweise das Basisbandspektrum des frequenzdiskreten Einzelsignals *S̃*₂ (f), welches dem oberen Teil B des ursprünglichen Informationssignalspektrums entspricht, um Δf_{LO} = f_{LO,2} - f_{LO,1} frequenzmäßig nach oben verschoben werden. Dadurch ergibt sich nach der Verschiebung des Spektrums *S̃*₂ (f) um Δf_{LO} in Kombination mit dem Spektrum *S̃*₁ (f) das in Fig. 7c gezeigte Gesamtspektrum S_{ges} (f) mit der Bandbreite B_{HF}. Das durch die frequenzrichtige Kombination resultierende Gesamtspektrum S_{ges}(f) entspricht dabei dem ursprünglichen Informationssignalspektrum S_{HF}(f) im Basisbandbereich.

In der Einrichtung 14 zum Kombinieren werden also bislang getrennt verarbeitete Einzelsignale im Frequenzbereich so übereinandergelegt bzw. verschoben und addiert, dass sie sich lückenlos aneinander anschließen. Bei der Addition wird lediglich der jeweilige Überlappungsbereich berücksichtigt, in dem sich die vorzugsweise punksymmetrischen Flanken der Teilspektren überlappen. Die anderen Daten bleiben unverändert. Damit die Addition ein sinnvolles Ergebnis liefert, ist es vorteilhaft, wenn der Frequenz-Offset Δf_{LO} zwischen zwei benachbarten Abwärtsmischsignalen, die sich, wie eingangs beschrieben, aus dem jeweiligen (anologen) Lokaloszillatorsignal und/oder dem jeweiligen (digitalen) NCO-Signal ergeben können, einem ganzzahligen Vielfachen des Binabstandes der FFT entspricht. D.h., Einrichtung 14 zum Kombinieren ist ausgebildet, um die Spektren der in den Frequenzbereich transformierten Einzelsignale sₙ[k] jeweils um deren zugeordnete Abwärtsmischfrequenzen im Frequenzbereich nach oben zu verschieben, die sich um Vielfache des Binabstandes der FFT unterscheiden, so dass das Spektrum S_{ges}(f) des kombinierten Signals das Informationssignalspektrum S_{HF}(f) nachbildet. Durch einen Unterschied zwischen (benachbarten) Abwärtsmischfrequenzen entsprechend einem ganzzahligen Vielfachen des Binabstandes der FFT kann die Kombination der in den Frequenzbereich transformierten Einzelsignale erheblich vereinfacht und effizienter gestaltet werden.

Des Weiteren ist es vorteilhaft, wenn sämtliche Takte in dem hier beschriebenen System zueinander synchronisiert und phasenstarr sind.

Am Ausgang der Einrichtung 14 zum Kombinieren liegt nun gemäß einem Ausführungsbeispiel der vorliegenden Erfindung das frequenzdiskrete Spektrum des kombinierten Signals S_{ges} [m] (m=1, 2, ..., L_{FFT}) an, dass im Wesentlichen dem ursprünglichen Informationssignalspektrum S_{HF} (f) entspricht. Für einen Anwender interessante Signal- bzw. Spektralanteile können anschließend aus dem frequenzdiskreten Spektrum des kombinierten Signals S_{ges}[m] (m=1,2,...,L_{FFT}) herausgefiltert werden, indem die jeweils interessierenden Frequenzbereiche mit einer Übertragungsfunktion Gₓ(f) gewichtet und anschließend mittels einer IFFT (Inverse Fast Fourier Transform) wieder in den diskreten Zeitbereich umgesetzt werden. Dabei ist es selbstverständlich zulässig, dass sich die unterschiedlichen, interessierenden Frequenzbereiche überlappen und mehrfach verwendet werden. Die Breite L_{IFFT} einer IFFT kann bis zur Breite von S_{ges} [m] (m=1, 2,..., L_{FFT}) betragen.

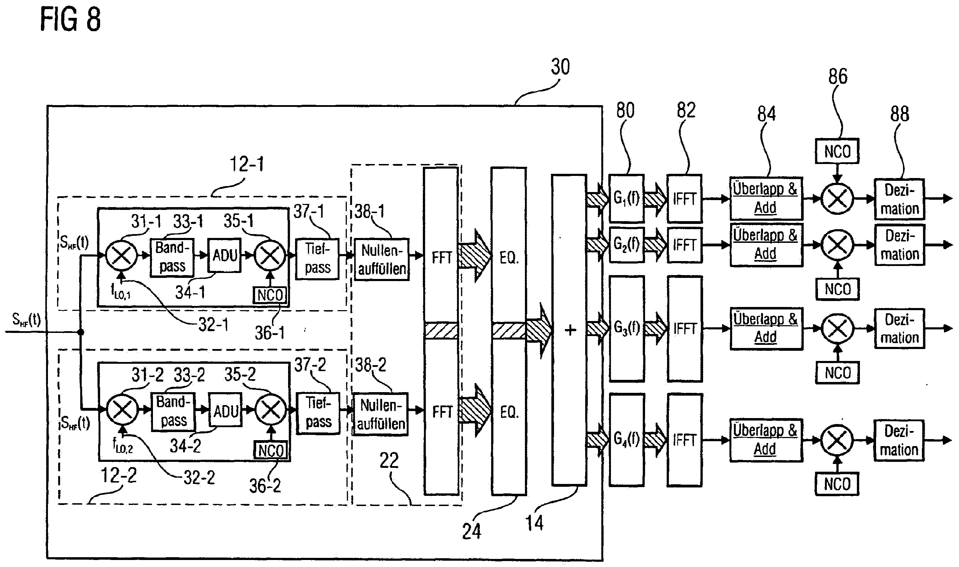

Ein Szenario, in dem jeweils interessierende Frequenzbereiche von S_{ges} [m] (m=1, 2,..., L_{FFT}) mit einer Übertragungsfunktion Gₓ(f) (x=1,2,3,4) gewichtet und anschließend mittels einer IFFT wieder in den diskreten Zeitbereich umgesetzt werden, ist in Fig. 8 dargestellt.

Durch die Filter G₁(f) bis G₄(f) werden beispielhaft vier, einen Anwender interessierende Frequenzbereiche aus dem frequenzdiskreten Spektrum des kombinierten Signals S_{ges}[m] herausgefiltert. Anschließend werden jeweils Ausgangssegmente des kombinierten Signals mittels einer IFFT in den diskreten Zeitbereich transformiert. Ein jeweils dem IFFT-Block nachgeschalteter Ausgangspuffer 84 sorgt dafür, dass die jeweiligen Daten der IFFT-Berechnungen mit dem erforderlichen zeitlichen Versatz addiert werden, der den beim Zero-Padding eingefügten Nullen entspricht. Dazu werden die in dem Puffer stehenden Werte ausgelesen und mit einem Addierer zeitrichtig addiert (Overlap-Add-Method). Mit einem NCO 86 können die in den diskreten Zeitbereich zurücktransformierten interessierenden Signalanteile jeweils in ein gewünschtes Frequenzband, beispielsweise das Basisband, verschoben werden. Durch die Dezimations-Blöcke 88 kann eine Abtastratenanpassung erzielt werden. Beispielsweise könnte durch ein Verhältnis L_{IFFT}/L_{FFT} im Zeitbereich eine Abtastratenwandlung stattgefunden haben, die dem Verhältnis der Länge der IFFT zu der Länge L_{FFT} der FFTs für die einzelnen Einzelsignale entspricht.

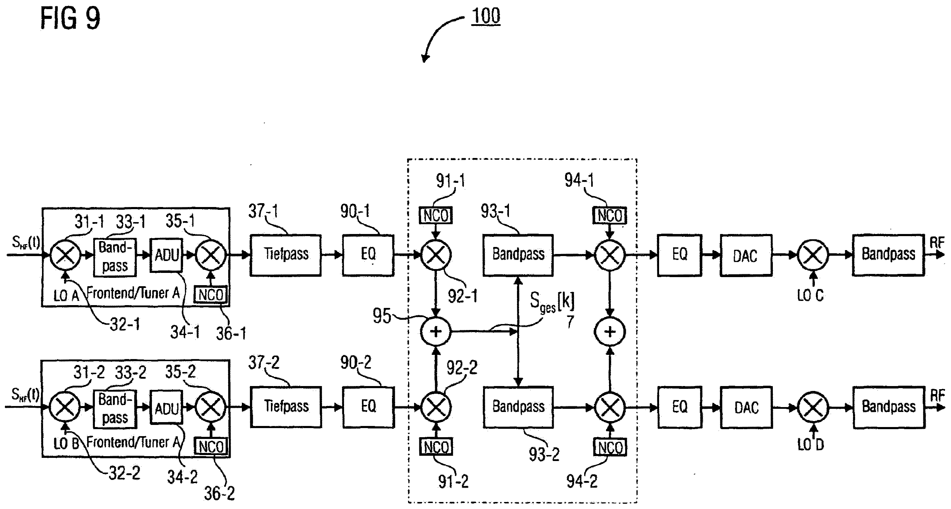

Bezug nehmend auf Fig. 9 wird nun noch eine weitere Ausführungsform einer Vorrichtung zum Empfangen eines breitbandigen Informationssignals beschrieben. Im Gegensatz zu den im Vorhergehenden beschriebenen Ausführungsformen ist bei der in Fig. 9 dargestellten Vorrichtung 100 der Kern der Signalverarbeitung im Zeitbereich implementiert.

Fig. 9 zeigt zwei Frequenzumsetzer 31-n bis 36-n (n = 1,2), die jeweils einen Teil des Informationssignalspektrums digitalisieren und digital ins Basisband umsetzen. Der digitale Tiefpass 37-n (n = 1,2) zusammen mit einem Entzerrerfilter 90-n (n = 1,2) sorgt jeweils dafür, dass die beiden Teilspektreh jeweils im Überlappungsbereich mit korrekter Amplitude und Phase addiert werden können, wie es im Vorhergehenden bereits beschrieben wurde. Vor der Addition 95 werden mittels zweiter NCOs 91-n (n = 1,2) und Mischer 92-n (n = 1,2) jeweils die Ausgangssignale der Down-Konverter -n bis 36-n (n = 1,2) wieder auf eine korrekte Mittenfrequenz verschoben, so wie es anhand von Fig. 7 bereits erläutert wurde.

Die interessierenden Spektralanteile des zeitdiskreten kombinierten Signals S_{ges}[k], die wiedergegebenen werden sollen, werden mittels Bandpassfiltern 93-n (n = 1,2) ausgewählt und mittels NCOs 94-n wieder ins Basisband verschoben. Anschließend erfolgt eine Umsetzung in einen HF-Bereich. Soll die gesamte Bandbreite des Spektrums von S_{ges}[k] wiedergegeben werden, wählt man die Durchlasskurven der digitalen Bandpassfilter, Equalizer sowie die Phasenlagen der Lokaloszillatoren (und der NCO's) so, dass eine korrekte Summation im HF-Bereich erfolgen kann.

Zusammenfassend schafft die vorliegende Erfindung also ein Verfahren zum Empfangen eines breitbandigen Informationssignals mit einem Informationssignalspektrum mit einem Schritt des Erzeugens einer Mehrzahl von Einzelsignalen aus dem Informationssignal mit einer Mehrzahl von Empfängern, wobei jeder der Mehrzahl von Empfängern einen Mischer zum Abwärtsmischen des Informationssignals mit unterschiedlichen Abwärtsmisch- bzw. Lokaloszillatorfrequenzen aufweist, so dass Spektren der Einzelsignale jeweils einem unterschiedlichen Teil des Informationssignalspektrums entsprechen, und mit einem Schritt des Kombinierens der Einzelsignale in ein kombiniertes Signal, so dass das Spektrum des kombinierten Signals dem Informationssignalspektrum entspricht.

Ausführungsbeispiele der vorliegenden Erfindung können im Bereich von breitbandigen Hochfrequenzempfängern und Geräten zur Signalaufzeichnung eingesetzt werden. Sie ermöglichen es, mit geringem Aufwand aus einem breitbandigen Signalspektrum mehrere Kanäle mit geringerer Bandbreite zu extrahieren und einer weiteren Verarbeitung zuzuführen. Weiterhin erleichtert bzw. ermöglichen Ausführungsbeispiele der vorliegenden Erfindung die frequenzmäßige Parallelisierung von mehreren Aufzeichnungsgeräten, um auch Signale zu erfassen, deren Bandbreite.über der Bandbreite der einzelnen Aufzeichnungsgeräte liegen. Damit lassen sich beispielsweise Frequency Hopping-Signale und andere Spread-Spektrumverfahren aufklären, ohne dass dafür speziell auf den Anwendungsfall abgestimmte Gerätschaften erforderlich sind.

Insbesondere wird darauf hingewiesen, dass abhängig von den Gegebenheiten das erfindungsgemäße Schema zum Empfangen eines breitbandigen Informationssignals auch in Software implementiert sein kann. Die Implementierung kann auf einem digitalen Speichermedium, insbesondere einer Diskette oder einer CD mit elektronisch auslesbaren Steuersignalen erfolgen, die so mit einem programmierbaren Computersystem und/oder Mikrokontroller zusammenwirken können, dass das entsprechende Verfahren zum Empfangen eines breitbandigen Informationssignals ausgeführt wird. Allgemein besteht die Erfindung somit auch in einem Computerprogrammprodukt mit auf einem maschinenlesbaren Träger gespeicherten Programmcode zur Durchführung des erfindungsgemäßen Verfahrens, wenn das Computerprogrammprodukt auf einem Rechner und/oder Mikrokontroller abläuft. In anderen Worten ausgedrückt, kann die Erfindung somit als ein Computerprogramm mit einem Programmcode zur Durchführung eines Verfahrens zur Simulation eines aus einer Mehrzahl von Einzelsignalen zusammengesetzten Signals realisiert werden, wenn das Computerprogramm auf einem Computer und/oder Mikrokontroller abläuft.

## Patentansprüche

1. Vorrichtung (10; 20; 30; 100) zum Empfangen eines Informationssignals (s_{HF}(t)) mit einem Informationssignalspektrum (S_{HF}(f)), mit folgenden Merkmalen:
einer Mehrzahl von Empfängern (12-n) zum Erzeugen jeweils eines Einzelsignals (sₙ[k]) aus dem Informationssignal, wobei jeder der Mehrzahl von Empfängern einen Mischer zum Abwärtsmischen des Informationssignals mit einem jeweiligen Abwärtsmischsignal aufweist, und sich die Abwärtsmischfrequenzen der Abwärtsmischsignale unterscheiden, so dass Spektren der Einzelsignale (Sₙ(f)) jeweils einem unterschiedlichen Teil des Informationssignalspektrums entsprechen;
einer Einrichtung (22) zum Transformieren der Einzelsignale (sₙ[k]) in den Frequenzbereich, die ausgebildet ist, um Signalabschnitte der Einzelsignale (sₙ[k]) jeweils mittels einer Fast-Fourier-Transformation (FFT) aus einem Zeitbereich in einen Frequenzbereich zu transformieren,
wobei ein Frequenz-Offset (Δf_{LO}) zwischen zwei benachbarten Abwärtsmischsignalen einem ganzzahligen Vielfachen eines Binabstandes der Fast-Fourier-Transformation entspricht; und
einer Einrichtung (14) zum Kombinieren der in den Frequenzbereich transformierten [HP1] Einzelsignale (sₙ[k]) in ein kombiniertes Signal, die ausgebildet ist, um Frequenzbereiche der in den Frequenzbereich transformierten _{[HP2]} Einzelsignale (sₙ[k]) entsprechend den in den Frequenzbereich transformierten [HP3] Einzelsignalen (sₙ[k]) um die unterschiedlichen Abwärtsmischfrequenzen zugeordneten Frequenzverschiebungen zu verschieben, so dass das Spektrum (S_{ges}(f)) des kombinierten Signals das Informationssignalspektrum (S_{HF}(f)) nachbildet.

2. Vorrichtung gemäß Anspruch 1, wobei ein Mischer einen Lokaloszillator umfasst und ein Abwärtsmischsignal ein Lokaloszillatorsignal ist.

3. Vorrichtung gemäß Anspruch 2, die ferner eine Einrichtung zum Erzeugen der Lokaloszillatorsignale (32-n) jeweils durch Mischen eines Frequenzkamms mit einem Oszillatorsignal aufweist.

4. Vorrichtung gemäß Anspruch 1, wobei ein Mischer einen Lokaloszillator und/oder einen digitalen Mischer umfasst und ein Abwärtsmischsignal ein Lokaloszillatorsignal und/oder ein digitales Signal umfasst.

5. Vorrichtung gemäß einem der vorhergehenden Ansprüche, wobei die Abwärtsmischfrequenzen (f_{LO,n}) ausgewählt sind, um unterschiedliche Teile des Informationssignals (s_{HF}(t)) mit unterschiedlichen Spektralanteilen des Informationssignalspektrums (S_{HF}(f)) jeweils zu Zwischenfrequenzsignalen in einen Zwischenfrequenzbereich zu wandeln.

6. Vorrichtung gemäß einem der vorhergehenden Ansprüche, wobei die Mehrzahl von Empfängern (12-n) jeweils ein Bandpassfilter (33-n) aufweist, und die Bandpassfilter (33-n) eine gleiche Bandpassbandbreite (B_{BP}) aufweisen, um die jeweils unterschiedlichen Teile des Informationssignalspektrums (S_{HF}(f)) aus den Zwischenfrequenzsignalen zu filtern.

7. Vorrichtung gemäß Anspruch 6, wobei die Mehrzahl von Empfängern (12-n) jeweils einen AD-Wandler (34-n) umfasst, um die Zwischenfrequenzsignale mit einer Abtastfrequenz größer oder gleich der Bandpassbandbreite (B_{BP}) analog-digital zu wandeln.

8. Vorrichtung gemäß einem der vorhergehenden Ansprüche, wobei die Mehrzahl von Empfängern (12-n) jeweils eine Einrichtung (35-n) zum digitalen Mischen und einen numerisch kontrollierten Oszillator (36-n) aufweist, um die analog-digital gewandelten Zwischenfrequenzsignale um eine einstellbare Frequenz des numerisch kontrollierten Oszillators verschieben zu können.

9. Vorrichtung gemäß einem der Ansprüche 6 bis 8, wobei die Mehrzahl von Empfängern (12-n) jeweils ein digitales Tiefpassfilter (37-n) mit punktsymmetrischen Filterflanken und einer Filterbandbreite (B_{TP}) in einem Bereich 0,6B_{BP} < B_{TP} < B_{BP} aufweist.

10. Vorrichtung gemäß Anspruch 1, wobei die Einrichtung (22) zum jeweiligen Transformieren signalabschnittsweise arbeitet, um Signalabschnitte der Einzelsignale in mit Nullen ergänzter Form zu transformieren.

11. Vorrichtung gemäß Anspruch 1, bei der eine Bandbreite der FFT in der Größenordnung der doppelten Bandbreite des Einzelsignals (sₙ[k]) liegt.

12. Vorrichtung gemäß einem der vorhergehenden Ansprüche, wobei die Vorrichtung ferner eine Einrichtung (24) zur komplexwertigen spektralen Gewichtung der in den Frequenzbereich transformierten Einzelsignale umfasst.

13. Vorrichtung gemäß Anspruch 12, bei der die Einrichtung (24) zum Verarbeiten ausgebildet ist, um die in den Frequenzbereich transformierten Einzelsignale jeweils mit einer inversen Übertragungsfunktion (Hₙ[m]) des vorliegenden Signalkanals zu multiplizieren, wobei die inverse Übertragungsfunktion komplexwertig ist.

14. Vorrichtung gemäß Anspruch 1, bei der die Einrichtung (14) zum Kombinieren ferner ausgebildet ist, um die gemäß ihren Abwärtsmischfrequenzen (f_{LO,n}) verschobenen Einzelsignale (sₙ[k]) aufzuaddieren zu dem kombinierten Signal und spektrale Überlappungsbereiche zwischen den verschobenen Einzelsignalen (sₙ[k]) zu berücksichtigen, so dass das Spektrum (S_{ges}(f)) des kombinierten Signals dem Informationssignalspektrum (S_{HF}(f)) entspricht.

15. Verfahren zum Empfangen eines Informationssignals (s_{HF}(t)) mit einem Informationssignalspektrum (S_{HF}(f)), mit folgenden Schritten:
Erzeugen einer Mehrzahl von Einzelsignalen (sₙ[k]) aus dem Informationssignal mittels einer Mehrzahl von Empfängern (12-n), wobei jeder der Mehrzahl von Empfängern einen Mischer (31-n) zum Abwärtsmischen des Informationssignals mit Abwärtsmischsignalen (32-n) mit unterschiedlichen Abwärtsmischfrequenzen (f_{LO,n}) aufweist, so dass Spektren der Einzelsignale (Sₙ(f)) jeweils einem unterschiedlichen Teil des Informationssignalspektrums entsprechen; und
Transformieren der Einzelsignale (sₙ[k]) in den Frequenzbereich, die ausgebildet ist, um Signalabschnitte der Einzelsignale (sₙ[k]) jeweils mittels einer Fast-Fourier-Transformation (FFT) aus einem Zeitbereich in einen Frequenzbereich zu transformieren,
wobei ein Frequenz-Offset (Δf_{LO}) zwischen zwei benachbarten Abwärtsmischsignalen (32-n) einem ganzzahligen Vielfachen eines Binabstandes der Fast-Fourier-Transformation entspricht; und
Kombinieren der Mehrzahl von in den Frequenzbereich transformierten [HP4] Einzelsignalen (sₙ[k]) in ein kombiniertes Signal mittels Verschieben von Frequenzbereichen der in den Frequenzbereich transformierten [HP5] Einzelsignale (sₙ[k]) entsprechend den in den Frequenzbereich transformierten [HP6] Einzelsignalen (sₙ[k]) um die unterschiedlichen Abwärtsmischfrequenzen (f_{LO,n}) zugeordneten Frequenzverschiebungen, so dass das Spektrum (S_{ges}(f)) des kombinierten Signals dem Informationssignalspektrum (S_{HF}(f)) entspricht.

16. Computerprogramm zur Durchführung der Schritte des Verfahrens gemäß Anspruch 15, wenn das Computerprogramm auf einem Computer und oder Mikrocontroller abläuft.

## Claims

1. Device (10; 20; 30; 100) for receiving an information signal (s_{HF}(t)) comprising an information signal spectrum (S_{HF}(f)), comprising:
a plurality of receivers (12-n) for producing an individual signal (sₙ[k]) from the information signal, respectively, each of the plurality of receivers having a mixer for downmixing the information signal with a respective downmixing signal, and the downmixing frequencies of the downmixing signals differing, so that spectra of the individual signals (Sₙ(f)) correspond to different parts of the information signal spectrum, respectively;
a means (22) for transforming the individual signals (sₙ[k]) to the frequency domain, said means being configured to transform signal portions of the individual signals (sₙ[k]) from a time domain to a frequency domain in each case by means of a fast Fourier transform (FFT),
wherein a frequency offset (Δf_{LO}) between two adjacent downmixing signals corresponds to an integer multiple of a bin distance of the fast Fourier transform; and
a means (14) for combining the individual signals (sₙ[k]) transformed to the frequency domain into a combined signal, said means being configured to shift frequency domains of the individual signals (sₙ[k]) transformed to the frequency domain in accordance with the individual signals (sₙ[k]) transformed to the frequency domain by the frequency shifts associated with the different downmixing frequencies, so that the spectrum (Sₜₒₜ(f)) of the combined signal replicates the information signal spectrum (S_{HF}(f)).

2. Device as claimed in claim 1, wherein a mixer comprises a local oscillator, and a downmixing signal is a local oscillator signal.

3. Device as claimed in claim 2, further comprising a means for creating the local oscillator signals (32-n) by mixing a frequency comb with an oscillator signal in each case.

4. Device as claimed in claim 1, wherein a mixer comprises a local oscillator and/or a digital mixer, and a downmixing signal comprises a local oscillator signal and/or a digital signal.

5. Device as claimed in any of the previous claims, wherein the downmixing frequencies (f_{LO, n}) are selected to transform different parts of the information signal (s_{HF}(t)) having different spectral portions of the information signal spectrum (S_{HF}(f)) to intermediate-frequency signals to an intermediate-frequency domain.

6. Device as claimed in any of the previous claims, wherein the plurality of receivers (12-n) each comprise a bandpass filter (33-n), and the bandpass filters (33-n) comprise a same bandpass bandwidth (B_{BP}) to filter the respectively different parts of the information signal spectrum (S_{HF}(f)) from the intermediate-frequency signals.

7. Device as claimed in claim 6, wherein the plurality of receivers (12-n) each comprise an AD converter (34-n) to convert the intermediate-frequency signals having a sampling frequency larger than or equal to the bandpass bandwidth (B_{BP}) from analog to digital.

8. Device as claimed in any of the previous claims, wherein the plurality of receivers (12-n) each comprise a means (35-n) for digital mixing and a numerically controlled oscillator (36-n) so as to be able to shift the analog/digital converted intermediate-frequency signals by an adjustable frequency of the numerically controlled oscillator.

9. Device as claimed in any of claims 6 to 8, wherein the plurality of receivers (12-n) each comprise a digital low-pass filter (37-n) with point-symmetric filter slopes and a filter bandwidth (B_{TP}) within a range of 0.6 B_{BP} < B_{TP} < B_{BP}.

10. Device as claimed in claim 1, wherein the means (22) for respectively transforming signal portion by signal portion operates to transform signal portions of the individual signals in a form supplemented by zeros.

11. Device as claimed in claim 1, wherein a bandwidth of the FFT is in the order of magnitude of double the bandwidth of the individual signal (sₙ[k]).

12. Device as claimed in any of the previous claims, the device further comprising a means (24) for complex-valued spectral weighting of the individual signals transformed to the frequency domain.

13. Device as claimed in claim 12, wherein the means (24) for processing is configured to multiply the individual signals transformed to the frequency domain by an inverse transfer function (Hₙ[m]) of the present signal channel, respectively, the inverse transfer function being complex-valued.

14. Device as claimed in claim 1, wherein the means (14) for combining is further configured to add the individual signals (sₙ[k]) shifted in accordance with their downmixing frequencies (f_{LO, n}) up to form the combined signal and to take into account overlap areas between the shifted individual signals (sₙ[k]), so that the spectrum (Sₜₒₜ(f)) of the combined signal corresponds to the information signal spectrum (S_{HF}(f)).

15. Method of receiving an information signal (s_{HF}(t)) comprising an information signal spectrum (S_{HF}(f)), the method comprising:
producing a plurality of individual signals (sₙ[k]) from the information signal by means of a plurality of receivers (12-n), each of the plurality of receivers having a mixer (31-n) for downmixing the information signal with downmixing signals (32-n) having different downmixing frequencies (f_{LO, n}), so that spectra of the individual signals (Sₙ(f)) correspond to different parts of the information signal spectrum, respectively; and
transforming the individual signals (sₙ[k]) to the frequency domain, configured to transform signal portions of the individual signals (sₙ[k]) from a time domain to a frequency domain in each case by means of a fast Fourier transform (FFT),
wherein a frequency offset (Δf_{LO}) between two adjacent downmixing signals (32-n) corresponds to an integer multiple of a bin distance of the fast Fourier transform; and
combining the plurality of individual signals (sₙ[k]) transformed to the frequency domain into a combined signal by shifting frequency domains of the individual signals (sₙ[k]) transformed to the frequency domain in accordance with the individual signals (sₙ[k]) transformed to the frequency domain by the frequency shifts associated with the different downmixing frequencies (f_{LO, n}), so that the spectrum (Sₜₒₜ(f)) of the combined signal corresponds to the information signal spectrum (S_{HF}(f)).

16. Computer program for performing the steps of the method of claim 15, when the computer runs on a computer and/or microcontroller.

## Revendications

1. Dispositif (10; 20; 30; 100) pour recevoir un signal d'information (s_{HF}(t)) avec un spectre de signal d'information (S_{HF}(f)), aux caractéristiques suivantes:
une pluralité de récepteurs (12-n) destinés à générer, chacun, un signal individuel (sₙ[k]) à partir du signal d'information, chacun de la pluralité de récepteurs présentant un mélangeur destiné à mélanger vers le bas le signal d'information avec un signal de mélange descendant respectif, et les fréquences de mélange descendant des signaux de mélange descendant différant l'une de l'autre, de sorte que les spectres des signaux individuels (Sn(f)) correspondent chaque fois à une partie différente du spectre de signal d'information;
un moyen (22) destiné à transformer les signaux individuels (sn[k]) au domaine fréquentiel, lequel est réalisé pour transformer des segments des signaux individuels (sₙ[k]) chaque fois à l'aide d'une transformation de Fourier rapide (FFT) d'un domaine temporel en un domaine fréquentiel,
un décalage de fréquence (Δf_{L0}) entre deux signaux de mélange descendant adjacents correspondant à un multiple de nombre entier d'une distance de bin de la transformation de Fourier rapide; et
un moyen (14) destiné à combiner les signaux individuels (sₙ[k]), transformés dans le domaine fréquentiel pour obtenir un signal combiné qui est conçu pour déplacer les plages de fréquences des signaux individuels (sₙ[k]) transformés dans le domaine fréquentiel selon les décalages de fréquence associés aux signaux individuels (sₙ[k]) transformés dans le domaine fréquentiel autour des différentes fréquences de mélange descendant, de sorte que le spectre (Sₜₒₜ(f)) du signal combiné reproduise le spectre du signal d'information (S_{HF}(f)).

2. Dispositif selon la revendication 1, dans lequel un mélangeur comporte un oscillateur local et un signal de mélange descendant est un signal d'oscillateur local.

3. Dispositif selon la revendication 2, présentant par ailleurs un moyen destiné à générer les signaux d'oscillateur local (32-n) chaque fois en mélangeant un peigne de fréquence avec un signal d'oscillateur.

4. Dispositif selon la revendication 1, dans lequel un mélangeur comporte un oscillateur local et/ou un mélangeur numérique, et un signal de mélange descendant comporte un signal d'oscillateur local et/ou un signal numérique.

5. Dispositif selon l'une des revendications précédentes, dans lequel les fréquences de mélange descendant (f_{L0,n}) sont choisies de manière à convertir différentes parties du signal d'information (s_{HF}(t)) avec différentes parts spectrales du spectre de signal d'information (S_{HF}(f)) chaque fois en des signaux de fréquence intermédiaire dans une plage de fréquences intermédiaires.

6. Dispositif selon l'une des revendications précédentes, dans lequel la pluralité de récepteurs (12-n) présentent, chacun, un filtre passe-bande (33-n), et les filtres passe-bande (33-n) présentent une même largeur de bande passe-bande (B_{BP}), pour sortir par filtration les parties différentes respectives du spectre de signal d'information (S_{HF}(f)) des signaux de fréquence intermédiaire.

7. Dispositif selon la revendication 6, dans lequel la pluralité de récepteurs (12-n) comportent, chacun, un convertisseur AN (34-n), pour convertir d'analogique à numérique les signaux à fréquence intermédiaire à fréquence de balayage supérieure ou égale à la largeur de bande passe-bande (B_{BP}).

8. Dispositif selon l'une des revendications précédentes, dans lequel la pluralité de récepteurs (12-n) présentent, chacun, un moyen (35-n) destiné au mélange numérique et un oscillateur contrôlé numériquement (36-n), pour pouvoir déplacer les signaux à fréquence intermédiaire convertis d'analogique à numérique d'une fréquence réglable de l'oscillateur contrôlé numériquement.

9. Dispositif selon l'une des revendications 6 à 8, dans lequel la pluralité de récepteurs (12-n) présentent, chacun, un filtre passe-bas numérique (37-n) à flancs de filtre symétriques par rapport à un point et à largeur de bande de filtre (B_{TP}) dans une plage de 0,6 B_{BP} < B_{TP} < B_{BP}.

10. Dispositif selon la revendication 1, dans lequel le moyen (22) pour la transformation respective fonctionne par segment de signal, pour transformer les segments des signaux individuels sous forme remplie de zéros.

11. Dispositif selon la revendication 1, dans lequel une largeur de bande de la FFT est de l'ordre de grandeur de deux fois la largeur de bande du signal individuel (sₙ[k]).

12. Dispositif selon l'une des revendications précédentes, dans lequel le dispositif comporte par ailleurs un moyen (24) de pondération spectrale à valeurs complexes des signaux individuels transformés au domaine fréquentiel.

13. Dispositif selon la revendication 12, dans lequel le moyen (24) de traitement est réalisé pour multiplier les signaux individuels transformés au domaine fréquentiel chaque fois par une fonction de transmission inverse (Hₙ[m]) du canal de signal présent, la fonction de transmission inverse étant à valeurs complexes.

14. Dispositif selon la revendication 1, dans lequel le moyen (14) pour combiner est par ailleurs réalisé pour additionner les signaux individuels (sₙ[k]) déplacés selon leurs fréquences de mélange vers le bas (f_{L0,n}), pour obtenir le signal combiné et pour tenir compte de zones de recouvrement spectral entre les signaux individuels déplacés (sₙ[k]), de sorte que le spectre (Sₜₒₜ(f)) du signal combiné corresponde au spectre du signal d'information (S_{HF}(f)).

15. Procédé pour recevoir un signal d'information (S_{HF}(t)) avec un spectre de signal d'information (S_{HF}(f)), aux étapes suivantes consistant à:
générer une pluralité de signaux individuels (sₙ[k]) à partir du signal d'information au moyen d'une pluralité de récepteurs (12-n), chacun de la pluralité de récepteurs présentant un mélangeur (31-n) destiné à mélanger vers le bas le signal d'information avec des signaux de mélange vers le bas (32-n) à fréquences de mélange vers le bas (f_{L0,n}) différentes, de sorte que les spectres des signaux individuels (Sₙ(f)) correspondent, chacun, à une partie différente du spectre de signal d'information; et
transformer les signaux individuels (sₙ[k] au domaine fréquentiel, qui est conçue de manière à transformer les segments des signaux individuels (sₙ[k]) chaque fois au moyen d'une transformation de Fourier rapide (FFT) d'un domaine temporel à un domaine fréquentiel,
un décalage de fréquence (Δf_{L0}) entre deux signaux de mélange vers le bas adjacents (32-n) correspondant à un multiple de nombre entier d'une distance de bin de la transformation de Fourier rapide; et
combiner la pluralité de signaux individuels (sₙ[k)) transformés dans le domaine fréquentiel, pour obtenir un signal combiné par le déplacement des plages de fréquences des signaux individuels (sₙ[k]) transformés dans le domaine fréquentiel selon les décalages de fréquence associés aux signaux individuels (sₙ[k]) transformés dans le domaine fréquentiel autour des différentes fréquences de mélange descendant (f_{L0,n}), de sorte que le spectre (Sₜₒₜ(f)) du signal combiné corresponde au spectre du signal d'information (S_{HF}(f)).

16. Programme d'ordinateur pour réaliser les étapes du procédé selon la revendication 15 lorsque le programme d'ordinateur est exécuté sur un ordinateur ou un microcontrôleur.
